# EUROPÄISCHE PATENTSCHRIFT

(11) **EP 1 868 796 B1**
(45) Veröffentlichungstag und Bekanntmachung des Hinweises auf die Patenterteilung: **28.01.2009**
(21) Anmeldenummer: 06705425.4
(22) Anmeldetag: 04.04.2006
(51) Int. Cl.: B29C 70/46, D04H 1/46

(54) **VERFAHREN ZUR HERSTELLUNG EINES THERMOPLASTISCH VERFORMBAREN FASERVERSTÄRSKTEN HALBZEUGS**
METHOD FOR PRODUCING A THERMOPLASTICALLY DEFORMABLE FIBER-REINFORCED SEMIFINISHED PRODUCT
PROCEDE POUR PRODUIRE UN DEMI-PRODUIT THERMOPLASTIQUEMENT DEFORMABLE RENFORCE DE FIBRES

(30) Priorität: 05.04.2005 EP 05007391; 04.05.2005 EP 05009770
(43) Veröffentlichungstag der Anmeldung: 26.12.2007
(73) Patentinhaber: Quadrant Plastic Composites AG, 5600 Lenzburg 1 (CH)
(72) Erfinder: DITTMAR, Harri, 67271 Battenberg (DE); BRENTRUP, Karl-Ludwig, CH-5103 Möriken (CH)
(74) Vertreter: Schmauder & Partner AG Patent- & Markenanwälte VSP
(86) Internationale Anmeldenummer: PCT/CH2006/000189
(87) Internationale Veröffentlichungsnummer: WO 2006/105682

(56) Entgegenhaltungen:
- EP-A- 0 631 862
- EP-A- 0 647 519
- EP-A- 0 758 577
- EP-A- 0 780 504
- EP-A- 0 888 856
- WO-A-01/32405
- DE-A1- 3 420 132
- DE-A1- 10 114 554
- DE-A1- 10 319 967
- US-A- 5 134 016
- US-A1- 2004 112 501

## Beschreibung

Die Erfindung betrifft ein Verfahren zur Herstellung eines thermoplastisch verformbaren, faserverstärkten Halbzeugs aus einem Mischvlies, welches Thermoplastfasern und Verstärkungsfasern enthält.

Thermoplastisch verformbare Halbzeuge, welche Verstärkungsfasern, insbesondere Glasfasern enthalten, werden in zunehmendem Maße zur Herstellung von Formteilen, insbesondere für Kraftfahrzeugteile eingesetzt. Derartige "Kunststoffbleche" zeichnen sich durch hohe Zähigkeit und Festigkeit aus. Die GMT-Halbzeuge werden in großtechnischem Maßstab hergestellt durch Zusammenführen von Endlos-Glasmatten und Thermoplast-Schmelzebahnen auf einer Doppelbandpresse. Diese Arbeitsweise erfordert einen hohen Energieaufwand, da die zähflüssige Schmelze bei Drücken weit oberhalb von 1 bar in die Matte eingepresst werden muss. Fasergehalte von mehr als 45 Gew.% und Flächengewichte unter 2000 g/m² sind in der Praxis nur schwierig erreichbar. Da die Glasmatten im Allgemeinen aus Faserbündeln aufgebaut sind, ist die Tränkung nie ganz vollständig und gleichmäßig, so dass mikroskopisch inhomogene Bereiche auftreten, was zu hohen Standardabweichungen in den mechanischen Eigenschaften führt. Dies ist auch der Fall bei thermisch expandierten GMT-Platten, die aufgrund der Rückstellkräfte der vernadelten Glasfasermatten Luftblasen enthalten, die aber ungleichmäßig in der Matrix verteilt sind.

In der DE-A 36 14 533 ist ein Verfahren zur Herstellung von Formkörpern aus thermoplastischen Kunststoffen, die eine Verstärkungseinlage enthalten, beschrieben. Dabei wird in Anlehnung an die Textilfasertechnologie ein Mischvlies aus Thermoplastfasern und Verstärkungsfasern nach dem Krempel- oder Airlay-Verfahren hergestellt und z.B. durch Nadeln verfestigt. Zuschnitte aus diesem Mischvlies werden erwärmt und direkt, ohne vorheriges Konsolidieren, zu dreidimensionalen Formkörpern verpresst. Eine vollständige Durchtränkung ist hierbei, vor allem bei kompliziert geformten Bauteilen, jedoch kaum möglich, so dass die mechanischen Eigenschaften der Formteile zu wünschen übrig lassen.

Nach WO 98/35086 werden in einem aufwendigen Verfahren erst Misch-Faserstränge aus Verstärkungsfasern und Thermoplastfasern hergestellt, aus denen dann ein Vlies gebildet wird. Dieses Vlies wird auf einer Doppelbandpresse bei erhöhter Temperatur und hohem Druck zu einem Halbzeug verpresst.

In WO 02/062563 ist ein kontinuierliches Verfahren zur Herstellung von thermoplastisch verformbaren, dünnen Halbzeugen aus einem thermoplastischen Kunststoff und langen Verstärkungsfasern beschrieben. Es umfasst folgende Schritte:
A. Thermoplastfasern und Verstärkungsfasern werden trocken zu einem Mischvlies vermischt,
B. das Mischvlies wird durch Nadeln verfestigt,
C. das verfestigte Mischvlies wird erwärmt und
D. auf einem Kalander oder einem Glättwerk zum Halbzeug verpresst,
E gegebenenfalls werden Funktionsschichten aufgepresst.

Die WO 02/076711 und US 2004/0112501 A1 beschreiben ein ähnliches Verfahren zur Herstellung von dicken Mischvliesen, wobei das Verpressen in Stufe D auch durch eine Kaschiereinrichtung bei Drücken zwischen 1 und 10 bar durchgeführt werden kann. Es hat sich aber gezeigt, dass bei so hohen Drücken die Luftporen fast vollständig aus dem erweichten Mischvlies herausgedrückt werden, und dass die Schmelze in der Länge und in der Breite auseinanderfließt, was eine unkontrollierte Flächengewichtsänderung und ein Verziehen der Halbzeugbahn zur Folge hat und dazu führt, dass die Ränder der Halbzeugbahn nicht glatt und gerade, sondern wellig sind.

Ähnliche Probleme ergeben sich bei den Verfahren nach EP-B 593 716 und US-A 4,978,489, bei denen das Verpressen des Mischvlieses durch einander gegenüberliegende Druckrollen erfolgt. Dabei wird so stark verpresst, dass das erhaltene Halbzeug nur noch höchstens 20 Vol.%, vorzugsweise 10 bis 15 Vol.% Luftporen enthält. Bei dem Verfahren nach US-A 4,948,661 wird ein Mischvlies zwischen Heizplatten oder auch in einer Doppelbandpresse so lange verpresst, bis die Luft praktisch vollständig aus dem konsolidierten Produkt herausgepresst ist.

Das Verpressen von Mischvliesen in Kalandern oder durch Druckrollen hat den weiteren Nachteil, dass nur mit niedrigen Produktionsgeschwindigkeiten gearbeitet werden kann, und dass durch die abrupte Verdichtung im Walzenspalt sich eine Wulst bildet, was zu starker Dehnung und sogar zur Bildung von Löchern im Produkt führen kann.

Die WO 03/086 725 beschreibt einen Apparat und ein Verfahren zur Herstellung von faserverstärkten Verbundwerkstoffen. Dabei wird eine genadelte Mischfasermatte aus Thermoplastfasern und Verstärkungsfasern erwärmt und z.B. in einer kontinuierlichen Bandpresse verpresst. Es fehlen aussagekräftige Angaben über die dabei anzuwendenden Drücke. Es ist zwar die Rede davon, dass "pseudogeschäumte Verbundplatten" hergestellt werden können, jedoch werden keine Angaben über den Gehalt an Luftporen gemacht. Darüberhinaus soll der Verbund mehr als 60 Gew.% Thermoplastfasern enthalten.

Der Erfindung lag nun die Aufgabe zugrunde, ein einfaches kontinuierliches Verfahren zur Herstellung eines verzugfreien Halbzeugs aus einem thermoplastischen Kunststoff und Verstärkungsfasern zu entwickeln, das Luftporen in gleichmäßiger Verteilung enthält und problemlos zu Fertigteilen umformbar ist, die in allen Richtungen hervorragende, gut reproduzierbare Eigenschaften aufweisen.

Diese Aufgabe wird durch das erfindungsgemäße Verfahren gelöst. Dieses umfaßt folgende Verfahrensschritte:
A. Thermoplastfasern und individuelle, nicht gebundene Verstärkungsfasern werden miteinander vermischt. Als Thermoplasten kommen alle verspinnbaren thermoplastischen Kunststoffe in Frage, z.B. Polyolefine, wie Polyethylen und Polypropylen, Polyamide, lineare Polyester, thermoplastische Polyurethane, Polycarbonat, Polyacetale, sowie entsprechende Copolymere und Thermoplastmischungen, ferner hochtemperaturbeständige Polymere, wie Polyarylate, Polysulfone, Polyimide, Polyetherimide und Polyetherketone. Besonders bevorzugt ist Polypropylen mit einem MFI (230°C, 2.16 kg) nach DIN 53735 größer als 20 g/10 min, vorzugsweise zwischen 25 und 150 g/10 min. Die Thermoplastfasern weisen im Allgemeinen eine mittlere Länge (Gewichtsmittel) von 20 bis 120 mm auf.
   Bevorzugte Verstärkungsfasern sind Glasfasern, daneben können auch Kohlenstofffasern, Basaltfasern und Aramidfasern eingesetzt werden, ferner Naturfasern, z.B. solche aus Flachs, Jute, Hanf, Kenaf, Sisal und Baumwolle. Besonders interessant sind auch Basaltfasern, die gegenüber Glasfasern den Vorteil haben, dass sie bei der thermischen Aufarbeitung von faserverstärkten Formteilen nicht schmelzen und keine Schlacke bilden. Zweckmäßigerweise mischt man dabei die teuren Basaltfasern mit Naturfasern, z.B. im Gewichtsverhältnis 10 : 90 bis 50 : 50 ab. Die Verstärkungsfasern weisen im Allgemeinen ebenfalls eine mittlere Länge (Gewichtsmittel) von 20 bis 120 mm auf. Damit sie gut mit den Thermoplastfasern mischbar sind, müssen sie als individuelle, nicht gebundene Fasern vorliegen, d.h. sie dürfen nicht mit polymeren Bindemitteln gebunden sein. In einer speziellen Ausführungsform der Erfindung unterscheiden sich die mittlere Länge der Thermoplastfasern und der Verstärkungsfasern um maximal 25 %, vorzugsweise um maximal 10 % und insbesondere um maximal 3 %. Die bevorzugten Glasfasern sind als Endlosfasern oder als Schnittfasern in Längen von 0,5 inch (12,7 mm) im Handel. Es können auch Schnittfasern mit einer Länge von beispielsweise 1 inch (25,4 mm), 2 inch (50,8 mm) oder 3 inch (76,2 mm) bezogen werden. In der Praxis schneidet man die Thermoplastfasern auf etwa die gleich Länge wie die Glasfasern; d.h. bei einer bevorzugten Ausführungsform der Erfindung sind sowohl Polypropylenfasern als auch Glasfasern praktisch gleich lang und weisen eine mittlere Länge (Gewichtsmittel) im Bereich zwischen 25 und 55 mm auf.
   Die weitgehende Angleichung der Faserlängen hat den Vorteil, dass bei der Herstellung des Mischvlieses keine Entmischungen der Fasern auftreten kann, was zu Inhomogenitäten im Halbzeug, d.h. zu glasreichen und polymerreichen Bereichen führen würde. Dies ist insbesondere dann von Bedeutung, wenn das Vermischen der Fasern nach dem Airlay-Verfahren durchgeführt wird.
   Die Thermoplastfasern und Verstärkungsfasern werden im Gewichtsverhältnis 10 : 90 bis 80 : 20, vorzugsweise 20 : 80 bis 65 : 35 und insbesondere 25 : 75 bis 55 : 45, miteinander vermischt. Die Glasfasern sollten beim Vermischen weitgehend trocken sein, d.h. einen Wassergehalt weniger als 6%, insbesondere von 0,5 bis 4% aufweisen. Das Vermischen kann nach dem Airlay- oder nach dem Krempel-Verfahren vorgenommen werden. Diese Verfahren sind aus der Textiltechnologie wohlbekannt. Es hat sich gezeigt, dass beim Krempelverfahren die Fasern auch mehr Wasser, z.B. bis zu 15% enthalten können. Beim Vermischen entsteht ein als endloses Band vorliegendes Mischvlies mit einem Flächengewicht von vorzugsweise 200 bis 2500 g/m², insbesondere von 250 bis 1800 g/m². Beim Vermischen der Fasern werden Glasfaserbündel weitgehend geöffnet, so dass die meisten Glasfasern als individuelle Filamente vorliegen.
B. Das erhaltene Mischvlies wird vorzugsweise ein- oder beidseitig durch Nadeln verfestigt. Dies kann auf üblichen Nadelstühlen mit Filznadeln geschehen. Durch das Nadeln werden einerseits die Verstärkungsfasern etwas gebrochen, so dass die mittlere Faserlänge reduziert wird; andererseits wird durch das Nadeln das Mischvlies verfestigt, so dass es in den nachfolgenden Verfahrensschritten problemlos handhabbar ist. Außerdem bewirkt die Nadelung eine teilweise Orientierung der Verstärkungsfasern in z-Richtung, wodurch der Loft (die Rückstellung des komprimierten Halbzeugs beim Wiedererhitzen) gesteuert werden kann. Diese Orientierung der Verstärkungsfasern in z-Richtung hat ferner zur Folge, dass Fertigteile, die aus dem erfindungsgemäßen Halbzeug hergestellt werden, auch in dieser Richtung eine Verstärkung aufweisen. Grundsätzlich ist es auch möglich, die Verfestigung thermisch, z.B. durch IR-Bestrahlung oder mittels Heißluft vorzunehmen. Dabei sollten die Thermoplastfasern aber nicht vollständig aufschmelzen, sondern nur soweit anschmelzen, dass das Halbzeug einen für die Hantier- und Transportierbarkeit ausreichenden Zusammenhalt bekommt.
C. Das verfestigte Mischvlies wird, vorzugsweise in einem Durchluftofen oder durch IR-Bestrahlung, auf Temperaturen oberhalb der Erweichungstemperatur des Thermoplasten erwärmt. Vorzugsweise sollte die Temperatur 20 bis 60 °C oberhalb der Erweichungstemperatur liegen; bei Polypropylenfasern liegt sie bevorzugt zwischen 180 und 220 °C, insbesondere zwischen 190 und 210 °C. Die Thermoplastschmelze kann die Einzelfilamente gut benetzen und man erhält eine wesentlich bessere und gleichmäßigere Durchtränkung der Glasfasern als bei dem oben beschriebenen GMT-Verfahren, wo die Glasfaserbündel kaum in Einzelfilamente geöffnet sind.
   Dies hat z.B. eine schlechtere Homogenität der Eigenschaften bei Fertigteilen zur Folge, die aus GMT-Halbzeug hergestellt wurden.
D. Unmittelbar anschließend wird das erwärmte Mischvlies verpresst. Erfindungsgemäß wird dazu nacheinander ein beheiztes und ein gekühltes Presswerkzeug angewandt, in welchen das Mischvlies jeweils mit einem Druck von weniger als 0,8 bar, vorzugsweise von 0,05 bis 0,5 bar mindestens 3 sec lang verpresst wird. Dabei beträgt in dem beheizten Presswerkzeug die Verweilzeit vorzugsweise 5 bis 60 sec, in dem gekühlten Presswerkzeug kann sie mehrere Minuten betragen. Die obere Grenze von 0,8 bar ist kritisch; bei höheren Drücken wird der Gehalt an Luftporen zu gering. Als Presswerkzeuge werden bevorzugt Pressplatten eingesetzt, an denen zwei umlaufende Gewebebänder, z.B. aus teflonbeschichtetem Glas- oder Aramidgewebe, entlang gleiten, welche das Mischvlies mitführen. Vorzugsweise ist das beheizte Presswerkzeug auf mehr als 80 °C, insbesondere auf 100 bis 220 °C temperiert und das gekühlte Presswerkzeug auf weniger als 30 °C, insbesondere auf 15 bis 25 °C.
   Vorzugsweise ist in Stufe D zusätzlich vor dem beheizten Presswerkzeug noch ein beheiztes Walzenpaar und nach dem beheizten Presswerkzeug noch ein gekühltes Walzenpaar angeordnet.
   Das beheizte Walzenpaar dient dabei vor allem dazu, Funktionsschichten zuzuführen und an das erwärmte Mischvlies anzuhaften. Dazu genügt ein geringer Liniendruck von weniger als 10 N/mm. Das insbesondere auf 150 bis 200 °C beheizte Presswerkzeug bewirkt, dass die Verstärkungsfasern in die Thermoplastschmelze eingedrückt und ausreichend gut benetzt werden, und dass Luftblasen teilweise herausgedrückt werden. Das gekühlte Walzenpaar drückt mit einem Liniendruck von vorzugsweise 10 bis 50 N/mm die Funktionsschichten fest auf das teilkonsolidierte Halbzeug, so dass sie sich mit diesem verbinden. Ferner bewirkt es, falls erforderlich, eine weitere Dickenreduzierung. Durch das gekühlte Presswerkzeug wird die Thermoplastschmelze vollends eingefroren, so dass Rückstellkräfte nicht mehr wirksam werden können, und das Halbzeug wird konsolidiert.
   Das Verpressen wird unter den oben genannten vorzugsweisen Bedingungen so schonend durchgeführt, dass das entstehende Halbzeug noch einen Gehalt an Luftporen zwischen 25 und 75 Vol.%, insbesondere von 35 bis 65 Vol.% aufweist. Dadurch wird es, im Gegensatz zu kompakten oder nahezu kompakten Halbzeugen, z.B. durch Thermoformen in Presswerkzeugen leichter verarbeitbar. Infolge der oben beschriebenen gleichmäßigen Imprägnierung der Glasfasern mit der Thermoplastmatrix sind die Luftporen homogen in dem Halbzeug verteilt, im Gegensatz zu expandiertem GMT, das eine ungleichmäßige Verteilung der Luftblasen aufweist, sowie ungeöffnete Glasfaserbündel und Matrixagglomerate enthält. Gegebenenfalls werden gleichzeitig mit dem Verpressen ein- oder beidseitig Funktionsschichten an das erwärmte Mischvlies herangeführt und mitverpresst. Dies können Dekorschichten, dünne Faservliese, Thermoplastfolien oder Stoffbahnen sein.

Das entstandene flächige Halbzeug weist vorzugsweise eine Dicke von 0,5 bis 10 mm, insbesondere von 1,0 bis 5,0 mm auf. Für spezielle Anwendungen kann die Dicke auch mehr als 5,0 mm betragen. Die mittlere Länge (Gewichtsmittel) der Verstärkungsfasern im Halbzeug beträgt 20 bis 120 mm, vorzugsweise sind die Fasern 25 bis 100 mm und insbesondere 25 bis 50 mm lang.

Ein weiterer Gegenstand der Erfindung ist ein thermoplastisch verformbares Halbzeug aus 25 bis 55 Gew.% eines thermoplastischen Kunststoffs und 75 bis 45 Gew.% Verstärkungsfasern mit einer mittleren Länge nach Gewicht von 25 bis 50 mm, welches 35 bis 65 Vol.%, vorzugsweise 45 bis 55 Vol.% Luftporen in gleichmäßiger Verteilung enthält, wobei die Verstärkungsfasern miteinander vernadelt sind und zu mehr als 80 %, vorzugsweise zu mehr als 90 % als individuelle Filamente vorliegen. Bevorzugt hat das Halbzeug ein Flächengewicht von 250 bis 1800 g/m² und enthält 25 bis 55 Gew.% Polypropylen und entsprechend 75 bis 45 Gew.% Glasfasern.

Die DE-A 195 20 477 betrifft eine faserverstärkte Folie oder Platte, die thermisch expandiert ist und demzufolge Luftblasen enthält. Wie oben beschrieben, sind diese Lufteinschlüsse sehr ungleichmäßig in der Platte verteilt, wohingegen im erfindungsgemäßen Halbzeug die Luftporen gleichmäßig verteilt sind. Ferner liegen in expandierten GMT-Platten die Glasfasern überwiegend als ungeöffnete Faserbündel vor. In beiden Fällen ist der Unterschied an rasterelektronenmikroskopische (REM-) Aufnahmen gut erkennbar. Im Beispiel 1 wird eine expandierte Platte beschrieben, deren Flächengewicht weit oberhalb von 2000 g/m² liegt. Die Länge der Glasfasern beträgt 100 mm und der Glasfaseranteil 30 Gew.%.

Die US-A 2004/ 011 2501 beschreibt ein verformbares Halbzeug, das aus einem Mischvlies aus Thermoplastfasern und Verstärkungsfasern durch Heißverpressen bei Drücken zwischen 1 und 10 bar hergestellt wurde. Bei derart hohen Drücken werden Luftporen fast vollständig aus dem erweichten Mischvlies herausgedrückt, so dass der Gehalt des Halbzeugs an Luftporen weit unter 35 Vol.% beträgt.

Die EP-A 758 577 betrifft ein verformbares flächiges Halbzeug, das nach dem "Papierverfahren" hergestellt wird durch Dispergieren von Schnittglasfaser- Bündeln ("chopped strands") und Thermoplastpartikeln in der wässrigen Lösung eines Emulgiermittels, Abpressen, Trocknen und Heißverpressen. Die dabei erhaltene Platte wird auf das 1,1 bis 15 fache thermisch zu einem porösen Halbzeug expandiert. Die Glasfasern sind im Halbzeug nicht vernadelt; von "individuellen Filamenten" ist nicht die Rede. Infolge der fehlenden Nadelung sind sie nicht zerbrochen, sondern weisen eine einheitlich gleiche Länge auf; außerdem sind sie alle zweidimensional in einer Ebene angeordnet. Dies alles hat zur Folge, dass aus dem Halbzeug hergestellte Fertigteile ungenügende mechanische Eigenschaften haben.

Die EP-A 888 856 betrifft zerkleinerte Kunststoff-Abfälle, z.B. Mischungen aus Kunststoff- und Naturfasern, die eine Dichte von 100 bis 1000 kg/m³ aufweisen können.

Das erfindungsgemäß hergestellte Halbzeug kann aufgerollt und gelagert werden oder gleich zu Platten, z.B. mit den Abmessungen 400 bis 3000 mm x 300 bis 2300 mm geschnitten werden. Es kann zu dreidimensionalen Fertigteilen thermoplastisch verarbeitet werden. Dazu werden entsprechende Zuschnitte zunächst auf Temperaturen oberhalb der Erweichungstemperatur des Thermoplasten erwärmt und dann umgeformt. Dabei expandiert das Halbzeug aufgrund der Rückstellkräfte des vernadelten Faservlieses und zwar umso mehr, je mehr Luftporen es enthält. Ein z. B. auf mehr als das Doppelte, vorzugsweise auf mehr als das Dreifache seiner ursprünglichen Dicke expandiertes Halbzeug lässt sich viel leichter umformen als eine kompakte Platte. Beim Umformen wird das Halbzeug in üblichen zweiteiligen Formen verpresst oder durch Tiefziehen verformt.

Die Fertigteile sind im Transportsektor als Automobil-, Eisenbahn- und Flugzeugteile, aber auch als Karosserieteile, sowie als großflächige Paneele und Möbelteile verwendbar, ferner als Akustikbauteile und als Decklagen in Sandwichteilen für Schalungselemente oder Trennwände.

### Beispiel 1

Stapelfasern aus Polypropylen mit einem Schmelzindex (230 °C, 2.16 kg) von 25 g/10 min und einer Länge von 40 mm wurden mit Schnittglasfasern einer Länge von 50,8 mm und einem Wassergehalt von etwa 1 % vorgemischt und dann in einem kontinuierlichen Airlay-Prozess homogen vermischt und filamentiert. Das Gewichtsverhältnis Polypropylenfasern zu Glasfasern betrug 60 : 40. Das erhaltene Mischvlies mit einem Flächengewicht von 1200 g/m² wurde einseitig auf einem konventionellen Nadelstuhl vernadelt. Das vorverfestigte, etwas mehr als 2 m breite Vlies wurde in einem Durchluftofen auf 190 °C erhitzt, wobei das Polypropylen aufschmolz, danach wurde es sofort in eine heiße Doppelbandpresse eingeführt. Dort wurde es bei einem Druck von 0,5 bar etwa 15 sec lang verpresst. Die Temperatur der Presse wurde bei 150 °C gehalten, um das Innere des Vlieses über dem Erweichungspunkt des Polypropylens zu halten und um eine homogene Durchtränkung der Glasfasern zu bewirken. Andererseits konnten die dreidimensional wirr verteilten Glasfasern im Vlies infolge des relativ niedrigen Drucks dem Pressdruck widerstehen, so dass die Luftporen im Innern des Vlieses erhalten blieben. Anschließend wurde das Vlies in eine kalte Doppelbandpresse, die auf 20 °C temperiert war, eingeführt. Dort wurde es bei einem Druck von 0,2 bar 90 sec lang gehalten um das Polypropylen zu verfestigen.

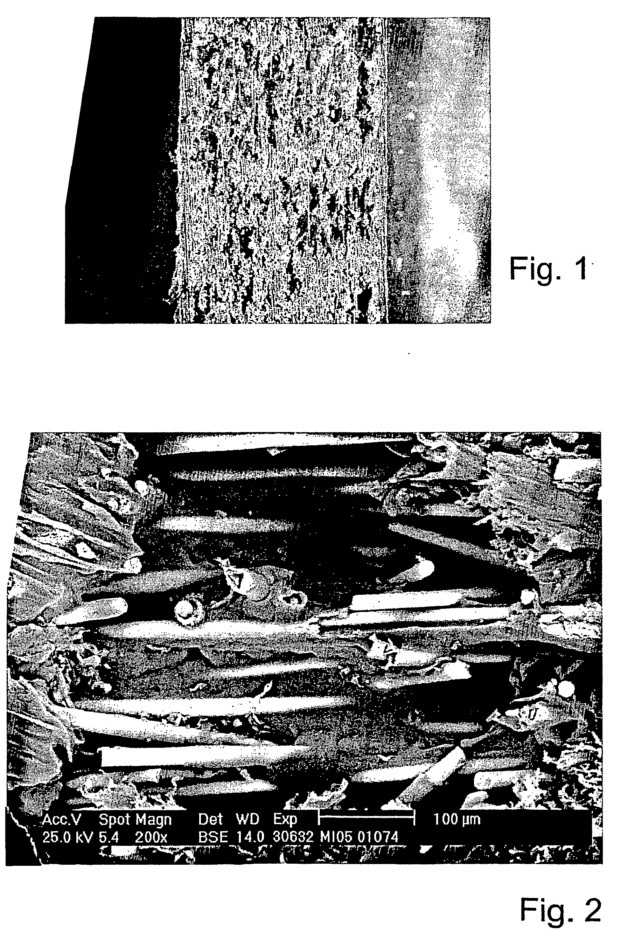

Das entstandene Halbzeug mit einer Dicke von 2,3 mm wurde zu Platten mit der Abmessung 2 m x 2 m geschnitten. Die mittlere Länge der Glasfasern betrug etwas weniger als 50 mm. Im Falle einer vollständigen Konsolidierung hätte die Dicke 1 mm betragen. Daraus errechnet sich ein Luftporengehalt von 55 Vol.%. Figur 1 zeigt eine auflichtmikroskopische Aufnahme mit 32-facher Vergrösserung an einem Schliffbild einer Probe des Halbzeugs. Man erkennt die recht homogene Verteilung der Luftporen. Figur 2 zeigt eine REM-Aufnahme mit 200-facher Vergrösserung an einem Schnitt durch eine Probe des Halbzeugs. Man erkennt den hohen Grad an Filamentierung der Einzelfasern (mehr als 90%). Die Platten zeigten eine hohe Steifigkeit, sie wiesen keinen Verzug auf und ließen sich problemlos, z.B. durch Roboter, handhaben und transportieren.

### Vergleichsbeispiel 2

Beispiel 1 wurde wiederholt, wobei jedoch in der heißen Doppelbandpresse bei einem Druck von 3 bar 90 sec lang und in der kalten Doppelbandpresse bei 2 bar 100 sec lang verpresst wurde. Das entstandene Halbzeug hatte eine Dicke von nur 1,1 mm. Daraus errechnet sich ein Luftporengehalt von 9 Vol.%. Infolge des hohen Drucks konnten weder dünne Folien noch Stoffbahnen ohne Beschädigung mitverpresst werden. Die Handhabung und der Transport der dünnen, kompakten Platten erwies sich als schwierig.

### Vergleichsbeispiel 3

Das gleiche Vlies wie in Beispiel 1 wurde zu einer 250 mm breiten Rolle geschnitten um die Breite an einen Laborkalander mit den Rollendimensionen 200 x 300 mm anzupassen. Das Vlies wurde in einem Durchluftofen auf 180 °C erhitzt und in den Kalanderspalt eingeführt. Die beiden Rollen waren auf 40 °C Oberflächentemperatur temperiert, der Liniendruck betrug 300 N/mm und die Drehgeschwindigkeit 5 m/min. Das verpresste Vlies hatte, bedingt durch den hohen Druck, eine Dehnung von 100 % und war infolge des starken Verzugs und der Faserorientierung unbrauchbar.

In einem nächsten Versuch wurden der Liniendruck auf 50 N/mm und die Drehgeschwindigkeit auf 2 m/min reduziert. Das verpresste Vlies war wegen des starken Verzugs und der Faserorientierung ebenfalls unbrauchbar.

Weitere Versuche wurden durchgeführt, bei denen Temperatur, Druck und Drehgeschwindigkeit variiert wurde. Es gelang aber nicht, Platten ohne Verzug und ohne innere Spannungen herzustellen.

### Vergleichsbeispiel 4

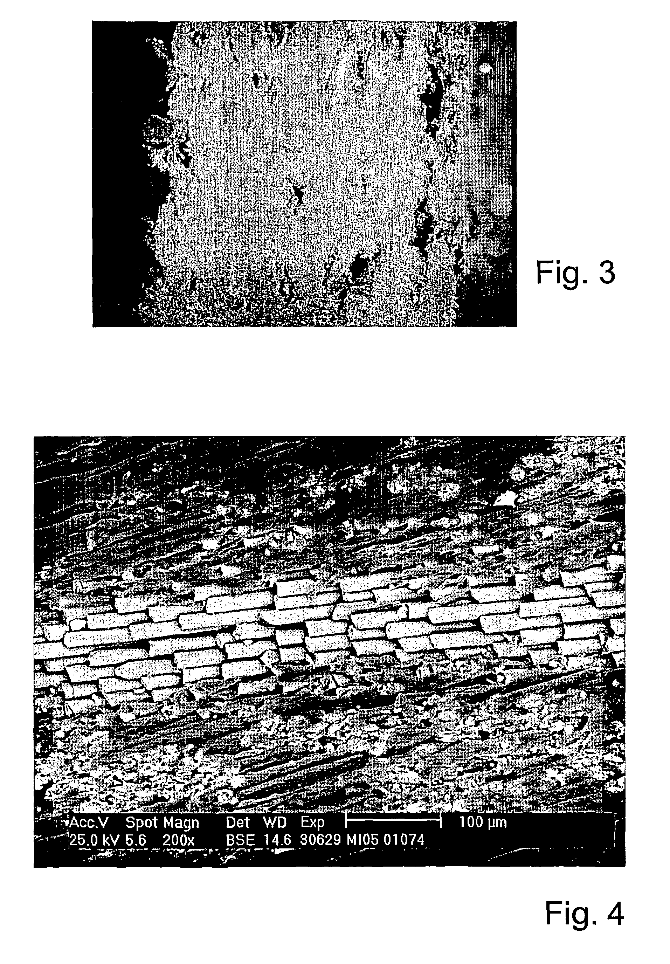

In Anlehnung an das GMT-Verfahren nach Beispiel 1 der DE-A 195 20 477 wurden zwei Glasfasermatten, die zusammen ein Flächengewicht von 1240 g/m² und eine Glasfaserlänge von 100 mm hatten, mit einer Polypropylenschmelze (Flächengewicht 2860 g/m²) in der beheizten Zone einer Doppelbandpresse bei einem Druck von 3 bar imprägniert. In der anschließenden gekühlten Zone wurde das Laminat bei praktisch drucklosem Kontakt zwischen den Stahlbändern und dem Substrat abgekühlt. Dadurch expandierten die Glasfasermatten zusammen mit dem noch geschmolzenen Polypropylen zwischen den Stahlbändern. Die Oberflächentemperatur des porösen Laminats wurde auf unter 110°C verringert, damit sich das Laminat leicht ablösen konnte. Das erhaltene expandierte GMT-Halbzeug hatte einen Glasfasergehalt von 30 Gew.% und eine Dichte von 0,6 g/cm³, was einem Gehalt an Luftporen von 50 Vol.% entspricht. Das Flächengewicht von 4100 g/m² ist viel zu hoch für eine Anwendung als Leichtbauteil und für Automobilinnenteile. Figur 3 zeigt eine auflichtmikroskopische Aufnahme mit 32-facher Vergrösserung an einem Schliffbild einer Probe des Halbzeugs. Man erkennt eine im Vergleich zu Figur 1 wesentlich inhomogenere Verteilung der Luftporen. Figur 4 zeigt eine REM-Aufnahme mit 200-facher Vergrösserung an einem Schnitt durch eine Probe des Halbzeugs. Man erkennt, dass die Faserbündel kaum geöffnet sind.

## Patentansprüche

1. Kontinuierliches Verfahren zur Herstellung eines thermoplastisch verformbaren Halbzeugs aus 10 bis 80 Gew.% eines thermoplastischen Kunststoffs und 90 bis 20 Gew.% Verstärkungsfasern durch folgende Verfahrensschritte:
A. Thermoplastfasern und individuelle, nicht gebundene Verstärkungsfasern werden miteinander zu einer endlosen Bahn vermischt,
B. das erhaltene Mischvlies wird durch Vernadeln oder thermisch verfestigt,
C. das verfestigte Mischvlies wird auf Temperaturen oberhalb des Erweichungspunktes des Thermoplasten erwärmt,
D. anschließend wird das erwärmte Mischvlies zum Halbzeug verpresst,
**dadurch gekennzeichnet, dass** das Verpressen nacheinander durch ein beheiztes und ein gekühltes Presswerkzeug erfolgt, in welchen das Mischvlies jeweils mit einem Druck von weniger als 0,8 bar mindestens 3 sec lang verpresst wird.

2. Verfahren nach Anspruch 1, **dadurch gekennzeichnet, dass** gleichzeitig mit dem Verpressen in Stufe D Funktionsschichten auf das erwärmte Mischvlies aufgepresst werden.

3. Verfahren nach Anspruch 1, **dadurch gekennzeichnet, dass** die mittlere Länge nach Gewicht sowohl der Thermoplastfasern als auch der Verstärkungsfasern 20 bis 120 mm beträgt, wobei sich vorzugsweise die Längen der beiden Faserarten um maximal 25 % unterscheiden.

4. Verfahren nach Anspruch 1, **dadurch gekennzeichnet, dass** beim Verpressen in den Presswerkzeugen ein Druck von jeweils 0,05 bis 0,5 bar angewandt wird und die Verweilzeit in dem beheizten Presswerkzeug 5 bis 60 sec beträgt, so dass das entstehende Halbzeug einen Gehalt an Luftporen von 25 bis 75 Vol.%, vorzugsweise von 35 bis 65 Vol.% aufweist.

5. Verfahren nach Anspruch 1, **dadurch gekennzeichnet, dass** als Presswerkzeug Pressplatten eingesetzt werden, an denen umlaufende Gewebebänder entlang gleiten, welche das Mischvlies mitführen.

6. Verfahren nach Anspruch 1, **dadurch gekennzeichnet, dass** in dem beheizten Presswerkzeug eine Temperatur von mehr als 80 °C, vorzugsweise von 100 bis 220 °C und in dem gekühlten Presswerkzeug eine Temperatur von weniger als 30 °C, vorzugsweise von 15 bis 25 °C herrscht.

7. Verfahren nach Anspruch 1, **dadurch gekennzeichnet, dass** in Stufe D zusätzlich vor dem beheizten Presswerkzeug noch ein beheiztes Walzenpaar und nach dem beheizten Presswerkzeug noch ein gekühltes Walzenpaar angeordnet ist.

8. Verfahren nach Anspruch 7, **dadurch gekennzeichnet, dass** in dem beheizten Walzenpaar ein Liniendruck von weniger als 10 N/mm angewandt wird.

9. Verfahren nach Anspruch 7, **dadurch gekennzeichnet, dass** in dem gekühlten Walzenpaar ein Liniendruck von 10 bis 50 N/mm angewandt wird.

10. Thermoplastisch verformbares Halbzeug aus 25 bis 55 Gew.% eines thermoplastischen Kunststoffs und 75 bis 45 Gew.% Verstärkungsfasern einer mittleren Länge nach Gewicht von 25 bis 50 mm, mit einem Gehalt an Luftporen von 35 bis 65 Vol.%, die in der Matrix gleichmäßig verteilt sind, **dadurch gekennzeichnet, dass** die Verstärkungsfasern miteinander vernadelt sind und zu mehr als 80 % als individuelle Filamente vorliegen.

11. Thermoplastisch verformbares Halbzeug nach Anspruch 10, **dadurch gekennzeichnet, dass** es aus 25 bis 55 Gew.% Polypropylen und 75 bis 45 Gew.% Glasfasern besteht und ein Flächengewicht von 250 bis 1800 g/m² aufweist.

## Claims

1. A continuous method for producing of a thermoplastically deformable semifinished product containing 10 to 80 wt% of a thermoplastic material and 90 to 20 wt% of reinforcing fibers, comprising the following method steps:
A. blending of thermoplastic fibers and individual non-bounded reinforcing fibers to form a continuous nonwoven mat,
B. consolidating the resulting blended nonwoven mat by thermal treatment or by needling,
C. heating the consolidated blended nonwoven mat to a temperature above the softening temperature of the thermoplastic fibers,
D. compressing the heated blended nonwoven mat to form a semifinished product,
**characterized in that** the compressing is carried out successively by a heated compression mold and on a cooled compression mold, wherein the blended nonwoven mat is compressed at a pressure of less than 0.8 bar for at least 3 sec.

2. The method according to claim 1, **characterized in that** functional layers are compressed onto the heated nonwoven mat simultaneously with the compressing in step D.

3. The method according to claim 1, **characterized in that** the average length (weight average) of the thermoplastic fibers and of the reinforcing fibers is 20 to 120 mm, the average lengths of the two fiber types preferably differing by maximally 25%.

4. The method according to claim 1, **characterized in that** during compressing in the compression mold a pressure between 0.05 to 0.5 bar is applied and that the residence time in the heated compression mold is 5 to 60 sec, so that the resulting semifinished product retains an air pore content of 25 to 75 vol%, preferably 35 to 65 vol%.

5. The method according to claim 1, **characterized in that** the compression mold comprises pressing plates along which slide revolving fabric belts that entrain the nonwoven mat.

6. The method according to claim 1, **characterized in that** the temperature of the heated compression mold is greater than 80°C, preferably between 100 to 220°C, and that the temperature of the cooled compression mold is less than 30°C, preferably from 15 to 25°C.

7. The method according to claim 1, **characterized in that** in step D a heated pair of rollers is positioned upstream from the heated compression mold and a cooled pair of rollers is positioned downstream from the heated compression mold.

8. The method according to claim 7, **characterized in that** a lineal pressure of less than 10 N/mm is applied by the heated roll pairs.

9. The method according to claim 7 **characterized in that** a lineal pressure of 10 to 50 N/mm is applied by the cooled roll pairs.

10. Thermoplastically deformable semifinished product containing 25 to 55 wt% of a thermoplastic material and 75 to 45 wt% of reinforcing fibers having an average length (weight average) of 25 to 50 mm and a content of air pores of 35 to 65 vol% that are uniformly distributed in the matrix, **characterized in that** the reinforcing fibers are needled to one another and are present as individual filaments to an extent of more than 80 %.

11. Thermoplastically deformable semifinished product according to claim 10, **characterized in** comprising 25 to 55 wt% of polypropylene and 75 to 45 wt% of glass fibers and having an areal weight of 250 to 1800 g/m².

## Revendications

1. Procédé de fabrication d'un produit semi-fini plastiquement déformable composé de 10 à 80% en poids d'une matière thermoplastique et de 90 à 20% en poids de fibres de renforcement, comprenant les étapes de procédé suivantes :
A- on mélange des fibres thermoplastiques et des fibres de renforcement, individuelles, non liées, pour former une bande sans fin,
B- on renforce la bande non tissée mélangée, obtenue, par aiguilletage ou par un moyen thermique,
C- on chauffe la bande non tissée mélangée, renforcée, à des températures supérieures au point de ramollissement de la matière thermoplastique,
D- ensuite, on comprime la bande non tissée mélangée, chauffée pour former un produit semi-fini,
**caractérisé en ce que**
la compression est faite de manière successive à l'aide d'un outil de presse chauffé et d'un outil de presse refroidi, dans lesquels on comprime la bande non tissée mélangée chaque fois sous une pression inférieure à 0,8 bar pendant au moins 3 sec.

2. Procédé selon la revendication 1,
**caractérisé en ce qu'**
en même temps que l'on comprime dans l'étape D, on presse des couches fonctionnelles sur la bande non tissée mélangée, chauffée.

3. Procédé selon la revendication 1,
**caractérisé en ce que**
la longueur moyenne en poids à la fois des fibres thermoplastiques et des fibres de renforcement est de 20 à 120 mm et, de préférence, les longueurs des deux types de fibres différent au maximum de 25%.

4. Procédé selon la revendication 1,
**caractérisé en ce que**
lors de la compression dans les outils de compression, on exerce une pression chaque fois de 0,05 jusqu'à 0,5 bar et le temps de séjour dans l'outil de presse, chauffé, est de 5 à 60 sec de sorte que le produit semi-fini obtenu a une teneur en pores d'air représentant 25 à 75% en volume et, de préférence 35 à 65% en volume.

5. Procédé selon la revendication 1,
**caractérisé en ce que**
l'outil de presse utilise des plaques de presse le long desquelles glissent des bandes de tissu en circulation entraînant la bande non tissée, mélangée.

6. Procédé selon la revendication 1,
**caractérisé en ce que**
dans l'outil de presse chauffé, on a une température supérieure à 80°C et, de préférence, comprise entre 100 et 220°C et dans l'outil de presse refroidi, on a une température inférieure à 30° et, de préférence, comprise entre 15 et 25°C.

7. Procédé selon la revendication 1,
**caractérisé en ce que**
dans l'étape D, en plus, en amont de l'outil de presse chauffé, on a une paire de cylindres chauffés et, en aval de l'outil de presse chauffé, on a encore une paire de cylindres refroidis.

8. Procédé selon la revendication 7,
**caractérisé en ce que**
dans la paire de cylindres chauffés, on applique une pression linéaire inférieure à 10 N/mm.

9. Procédé selon la revendication 1,
**caractérisé en ce qu'**
dans la paire de cylindres refroidis, on applique une pression linéaire de 10 à 50 N/mm.

10. Produit semi-fini thermoplastique déformable contenant 25 à 55% en poids d'une matière thermoplastique et 75 à 45% en poids de fibres de renforcement d'une longueur moyenne selon le poids, comprise entre 25 et 50 mm, une teneur en pores d'air de 35 à 65% en volume, répartis régulièrement dans la matrice,
**caractérisé en ce que**
les fibres de renforcement sont aiguilletées les unes avec les autres et sont présentes à plus de 80% de filaments individuels.

11. Produit semi-fini thermoplastique déformable selon la revendication 10,
**caractérisé en ce qu'**
il se compose de 25 à 55% en poids de polypropylène et de 75 à 45% en poids de fibres de verre et le poids en surface est 250 à 1 800g/m².
